# EUROPEAN PATENT SPECIFICATION

(11) **EP 3 009 301 B1**
(45) Date of publication and mention of the grant of the patent: **21.12.2022**
(21) Application number: 15189660.2
(22) Date of filing: 13.10.2015
(51) Int. Cl.: B60Q 1/00, B60Q 1/26, F21S 43/14, F21S 43/145, F21S 43/19, F21S 43/239, F21S 43/241, F21S 43/245, F21S 43/247, F21S 43/27, G02B 6/00

(54) **AUTOMOTIVE LIGHT**
KRAFTFAHRZEUGLICHT
PHARE AUTOMOBILE

(30) Priority: 13.10.2014 IT TV20140148
(43) Date of publication of application: 20.04.2016
(73) Proprietor: MARELLI AUTOMOTIVE LIGHTING ITALY S.p.A., 10078 Venaria Reale (TO) (IT)
(72) Inventor: BUZZURRO, Alessandro, 33028 TOLMEZZO (IT); SCHICCHERI, Nicola, 33028 TOLMEZZO (IT); FAVRO, Ivan, 33028 TOLMEZZO (IT)
(74) Representative: Bellemo, Matteo

(56) References cited:
- EP-A2- 1 113 216
- EP-A2- 2 505 911
- EP-A2- 2 693 105
- WO-A1-2014/156668
- DE-A1-102009 009 087
- US-A1- 2009 027 911
- US-A1- 2009 262 545
- US-A1- 2016 040 847

## Description

The present invention relates to an automotive light.

More in detail, the present invention relates to a rear light for automobiles, use to which the following description will make explicit reference without this implying any loss of generality.

As is known, the most recent rear lights for automobiles usually comprise: a rear rigid body which is substantially basin-shaped and is structured so as to be stably recessed into a compartment specifically made of the rear part of the vehicle body; a front lenticular half-shell, which is placed to close the mouth of the rear body so as to surface on the outside of the vehicle body and is provided with a series of transparent or semi-transparent portions, usually of different colours from one another; and a series of lighting assemblies which are placed within the rear body, each immediately underneath a respective transparent or semi-transparent portion of the front lenticular half-shell, so as to be able to backlight the same transparent or semi-transparent portion of the half-shell.

In the most modern automotive lights, each lighting assembly is made up of a series of LED diodes (Light-Emitting Diodes) which are placed one beside the other, on a supporting board which is provided with the power and control circuits of the various LED diodes and is placed within the rear body so that the LED diodes are faced to the transparent or semi-transparent portion of the front half-shell.

Unfortunately LED diodes are punctiform light sources, therefore a large number of LED diodes is necessary to be able to homogeneously backlight each transparent or semi-transparent portion of the half-shell.

The distribution of the LED diodes, in fact, must be such as to produce a light beam that is able to meet the photometric specifications envisaged for the light signal associated to the transparent or semi-transparent portion of the half-shell, and that moreover has an intensity of the light as uniform as possible throughout the whole extension of the transparent or semi-transparent portion, so as to meet the aesthetic requirements of manufacturers of motor vehicles, motorcycles, and the like.

During the last few years, some automobile manufacturers decided to equip the new models of automobile with rear lights that are able to create, on the front half-shell of the light, light patterns and/or light signals with particularly elaborate light effects, which in both cases are univocally referable to the same automobile manufacturers.

In this way, even in conditions of poor or total absence of light, the new models of automobile are easily distinguishable from other automobiles in circulation.

Unfortunately, the need to produce light patterns and/or light effects always different to one another is limited by the emission peculiarities of LED diodes (LED diodes are light sources of punctiform type) and by the dimensions of the supporting board.

WO2014156668 A1 discloses an automotive light comprising: a substantially basin shaped, rear body; a front lenticular half-shell which is placed to close the mouth of the rear body and is provided with at least one transparent or semi-transparent portion; and at least one lighting assembly which emits light on command and is arranged inside the rear body so as to backlight the transparent or semi-transparent portion of the front lenticular half-shell; said at least one lighting assembly, in turn, comprising an organic EL planar light source which is able to emit light from its own front face and is located within the rear body, with its front face turned towards the inner surface of the front lenticular half-shell, so as to direct the emitted light towards the front lenticular half-shell. Said at least one lighting assembly additionally comprises a LED-type, concentrated light source which is located within the body, spaced apart bellow the planar light source, and is oriented so as to direct the emitted light towards the planar light source, so that the same light come out through the planar light source.

Aim of the present invention is to provide a rear light for automobiles which is able to produce light patterns and/or light effects that are new and different from the ones produced by the rear lights currently on the market.

In compliance with the above aims, according to the present invention there is provided an automotive light as defined in Claim 1 and preferably, though not necessarily, in any one of the claims that depend thereon.

The present invention will now be described with reference to the annexed drawings, which illustrate a non-limiting example of embodiment thereof and in which:
- Figure 1 is a perspective view of a rear light for automobiles realized according to the teachings of the present invention, with parts in section and parts removed for clarity;
- Figure 2 is an exploded perspective view of the automotive light illustrated in Figure 1;
- Figure 3 is a perspective view of a portion of the automotive light shown in Figure 1;
- Figure 4 is an exploded perspective view of a first component of the automotive light shown in Figures 1 and 2, with parts removed for clarity; whereas
- Figure 5 is an exploded perspective view of a second set of components of the automotive light shown in Figures 1 and 2.

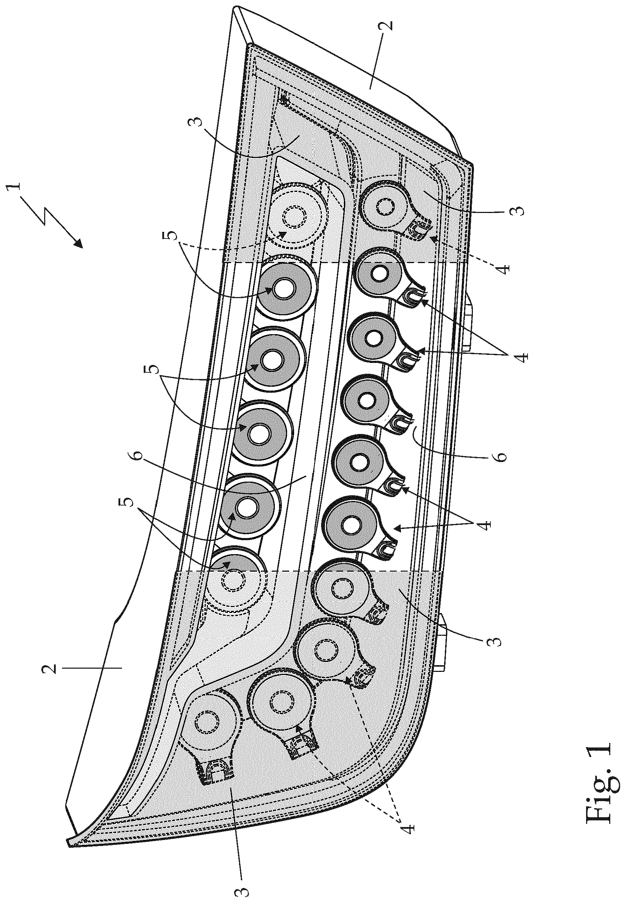

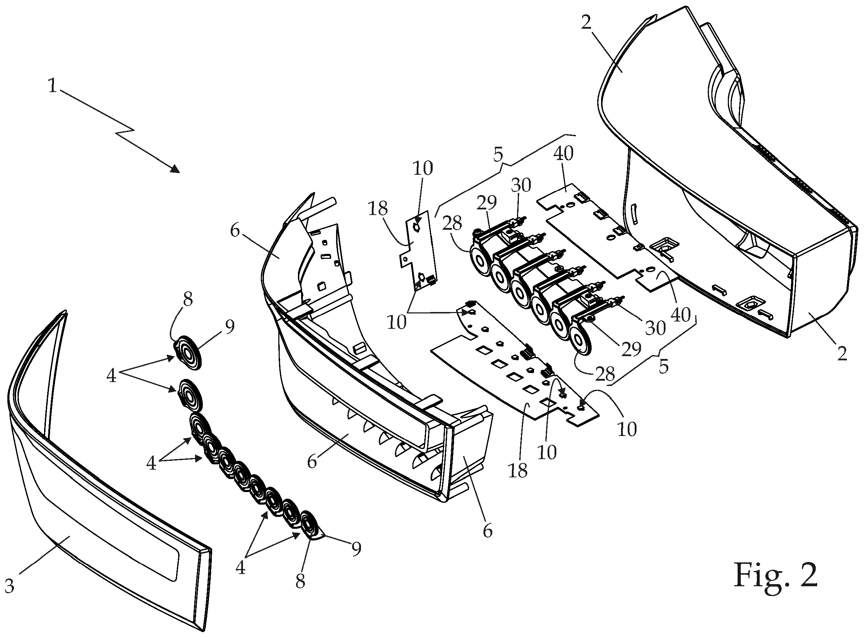

With reference to Figures 1 and 2, number 1 designates as a whole an automotive light particularly suited for being fixed on the preferably rear part of the vehicle body of a car, van, lorry, motorcycle or the like, i.e. a rear automotive light.

More in detail, automotive light 1 is preferably, though not necessarily, structured so as to be recessed into the rear part of the vehicle body of a car, motorcycle or similar vehicle, and basically comprises:
- a rear body 2 preferably made of plastic material, which is substantially basin-shaped and is preferably structured so as to be stably recessed into a compartment specifically realized in the rear part of the vehicle body (not shown);
- a front lenticular half-shell 3 preferably made of plastic material, which is placed to close the mouth of the rear body 2, preferably, though not necessarily, so as to be able to simultaneously surface on the outside of the vehicle body (not shown), and is provided with one or more transparent or semi-transparent portions, possibly also coloured; and
- one or more lighting assemblies, each of which emits light on command, and is arranged within rear body 2 in a position such as to be able to backlight a corresponding transparent or semi-transparent portion of the front lenticular half-shell 3.

More in detail, in the example shown the front lenticular half-shell 3 is preferably provided with two distinct transparent or semi-transparent portions, optionally also differently coloured to one another; and the automotive light 1 is preferably provided with two series of lighting assemblies which are structured to emit light when electricity powered, and are located within rear body 2 so as to be able to separately backlight the two transparent or semi-transparent portions of the front lenticular half-shell 3.

In other words, the automotive light 1 is preferably provided with a first series of lighting assemblies 4 that are placed within the rear body 2 in a position such as to be able to backlight a first transparent or semi-transparent portion of the front half-shell 3; and with a second series of lighting assemblies 5 that are placed within the rear body 2 in a position such as to be able to backlight the second transparent or semi-transparent portion of front half-shell 3.

Each lighting assembly 4 is therefore located underneath a corresponding sector of the first transparent or semi-transparent portion of half-shell 3 so as to be able to backlight said sector of the front lenticular half-shell 3. Likewise, each lighting assembly 5 is located underneath a corresponding sector of the second transparent or semi-transparent portion of half-shell 3 so as to be able to backlight said sector of the front lenticular half-shell 3.

In the example shown, in particular, rear body 2 is preferably made of opaque plastic material, preferably via an injection-moulding process. Front lenticular half-shell 3 is instead preferably made of transparent or semi-transparent plastic material, such as for example transparent or semi-transparent polycarbonate or polymethylmethacrylate (Plexiglas), also in this case preferably via an injection-moulding process.

With reference to Figures 1, 2, and 3, automotive light 1 is preferably moreover provided with a covering mask 6 made of opaque material and which is located within the rear body 2, underneath the front lenticular half-shell 3, and is structured so as to support and also hide from view part of the lighting assemblies 4 and/or 5.

Likewise rear body 2, also covering mask 6 is preferably made of opaque plastic material, preferably via an injection-moulding process.

With reference to Figures 2, 3, and 4, at least one and preferably all the lighting assemblies 4 in turn comprise: an OLED-type (acronym of Organic Light-Emitting Diode) planar light source 8 which is able to emit light in a distributed manner from its own front face, and is located underneath the front lenticular half-shell 3 with its front face turned towards the inner surface of the front half-shell 3, so as to direct the emitted light towards the front lenticular half-shell 3; and a rear supporting structure 9 which is located/fixed within the rear body 2, underneath the planar light source 8, and is able to support the planar light source 8, i.e. to keep it in place underneath the front lenticular half-shell 3.

More in detail, the planar light source 8 is fixed on the rear supporting structure 9 with its front face turned towards the inner surface of the front lenticular half-shell 3, and its rear face adherent to the surface of supporting structure 9.

The lighting assembly 4 moreover also comprises a LED-type (acronym of Light Emitting Diode) concentrated light source 10 which is located within the rear body 2, spaced apart behind the planar light source 8, and is oriented so as to direct the emitted light towards the rear supporting structure 9 which, in turn, is at least partially made of photoconductive material so as to be able to channel/convey the light produced by the concentrated light source 10 up to the planar light source 8, and then to let said light come out through the planar light source 8.

In other words, the rear supporting structure 9 incorporates a light-guide body which is made of photoconductive material, and is structured so as to channel/convey the light produced by the concentrated light source 10 up to the planar light source 8, and then to let said light come out through the planar light source 8.

More in detail, the rear supporting structure 9 forms a light-guide body which is structured so as to receive/collect the light emitted by the concentrated light source 10 and then channel/convey said light towards the rear face of the planar light source 8; whereas planar light source 8 is structured so as to be freely crossed by the light rays r coming out from the supporting structure 9.

In the example shown, in particular, the rear supporting structure 9 is entirely made of photoconductive material and is configured so that the light rays emitted by the concentrated light source 10 can freely enter into the supporting structure 9, travel within the supporting structure 9 up to the area in which the planar light source 8 is located by virtue of the same physical principles that regulate propagation of light within optical-fibre cables, and finally freely come out from the supporting structure 9 behind the planar light source 8.

Instead, the planar light source 8 is preferably provided with at least one transparent portion 11 which is specifically structured so as to be freely crossed by the light rays r coming out from the supporting structure 9. Preferably, transparent portion 11 is moreover located roughly in the middle of the planar light source 8.

Obviously, in a different embodiment the entire planar light source 8 could be structured so as to be freely crossed by the light rays r coming out from the supporting structure 9.

Preferably, the planar light source 8 is moreover fixed in immovable manner on supporting structure 9 which, in turn, is rigidly fixed to the rear body 2 and/or to the covering mask 6 so as to keep the planar light source 8 in place close to the front shell 3.

In the example shown, in particular, the rear supporting structure 9 is preferably configured to keep the planar light source 8 with the front face locally substantially parallel to the inner surface of the front lenticular half-shell 3, so that the light emitted by the planar light source 8 can reach the front lenticular half-shell 3 with an angle of incidence preferably close to 90°.

Preferably, though not necessarily, the planar light source 8 moreover is substantially circular in shape, and the transparent portion 11 is preferably located roughly at centre of the planar light source 8.

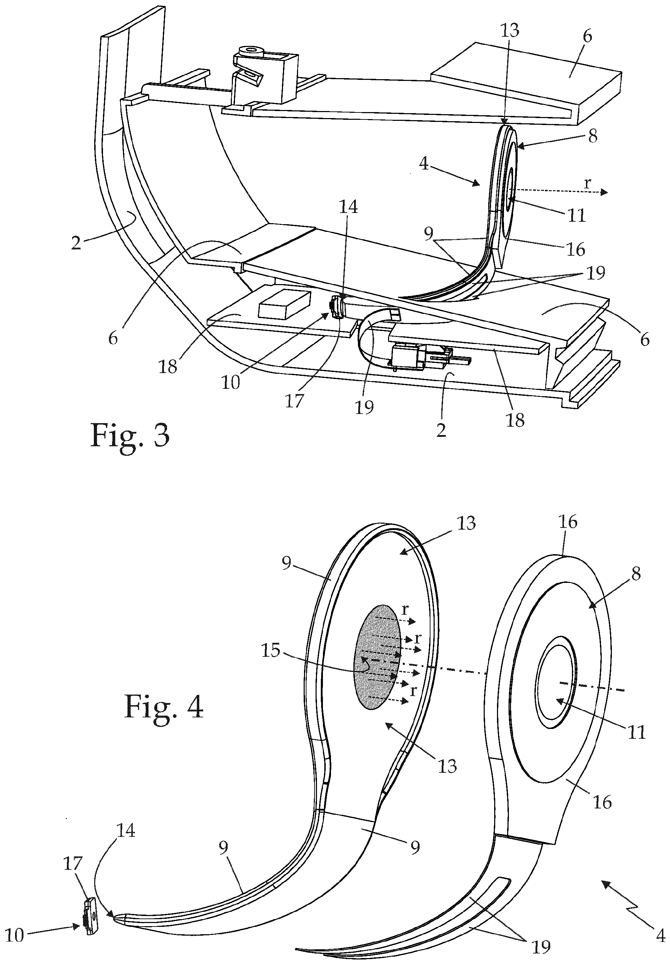

With reference to Figures 3 and 4, in the example shown, in particular, the rear supporting structure 9 consists of an oblong light-guide body which is arranged within the rear body 2 with its distal end 13 placed close to the front lenticular half-shell 3 and with its proximal end 14 placed close to rear body 2, and is structured so as to convey the light entering from its proximal end 14 up to its distal end 13.

The planar light source 8 is arranged with the rear face in abutment on the distal end 13 of the oblong light-guide body 9, whereas the concentrated light source 10 is arranged in abutment on or in any case directly facing the proximal end 14 of the oblong light-guide body 9, so as to direct the emitted light towards the proximal end 14.

Preferably, the concentrated light source 10 is moreover arranged underneath the covering mask 6, and the rear supporting structure 9, or rather the oblong light-guide body, engages in pass-through manner the covering mask 6 before arriving close to the front lenticular half-shell 3.

With reference to Figures 2, 3, and 4, in the example shown, in particular, the rear supporting structure 9 preferably consists of a ribbon-like stem made of photoconductive material and which extends within the rear body 2 from the planar light source 8 up to the concentrated light source 10, preferably following a curved line/path and preferably engaging in pass-through manner the covering mask 6, and has its distal end 13 shaped so as to accommodate the planar light source 8.

More in detail, the distal end 13 of photoconductive-material stem 9 preferably has the shape of a pan with dimensions complementary to those of the planar light source 8 so as to accommodate the planar light source 8.

In the example shown, in particular, the photoconductive-material, ribbon-like stem 9 is preferably substantially C-bent, and has the distal end 13 shaped substantially like a circular pan.

In addition, the oblong light-guide body 9, or rather the photoconductive-material stem 9, is preferably, though not necessarily, made of transparent polycarbonate, transparent polymethylmethacrylate (traditionally called Plexiglas), or of other similar transparent plastic material, preferably via an injection-moulding process.

With reference to Figure 4, preferably the oblong light-guide body 9, or rather the photoconductive-material stem 9, moreover has, at the distal end 13, a light-extracting area 15 where the outer surface of the oblong light-guide body 9 is embossed, satin-finished, and/or provided with a plenty of tiny prisms or other light-extracting elements that are specifically shaped/structured so as to deflect outwards the light rays travelling within the oblong light-guide body 9.

Preferably, though not necessarily, the oblong light-guide body 9 moreover can be coated, obviously except for distal end 13 and proximal end 14, with a reflecting outer jacket which is able to prevent the light travelling within the oblong light-guide body 9 from coming out from the light-guide body 9 in areas other than the distal end 13.

With reference to Figures 3 and 4, preferably the planar light source 8 in turn comprises a single plate-shaped OLED diode 16 (acronym of Organic Light-Emitting Diode) which is arranged resting on the supporting structure 9, or rather on the distal end 13 of the photoconductive-material stem 9, with its own rear face turned towards the supporting structure 9 and with its own front face turned towards the front lenticular half-shell 3, so as to direct the light that coming out from its own face in a direction perpendicular to the surface of the same face, towards the front lenticular half-shell 3 preferably with an angle of incidence close to 90°.

Preferably, the plate-shaped OLED diode 16 is moreover structured so as to emit light only from its front face, i.e. from the face turned towards front half-shell 3.

More in detail, in the example shown the plate-shaped OLED diode 16 is substantially circular in shape and has its own rear face (i.e. the face turned towards the light-guide supporting structure 9) appropriately rendered opaque and/or mirror finished, so as to reflect the incident light towards the front face of the OLED diode 16.

The central part of the plate-shaped OLED diode 16 is moreover overall structured so as to be transparent and preferably, though not necessarily, also photo-inactive, so as to enable the light rays r coming out from the distal end 13 of light-guide body 9 to freely pass through the OLED diode 16. The transparent, central part of plate-shaped OLED diode 16 thus forms the transparent portion 11 of planar light source 8.

In other words, the plate-shaped OLED diode 16 is preferably structured so as to have a light-emitting area which is annular in shape and surrounds a transparent central area.

With reference to Figures 2, 3, and 4, preferably the concentrated light source 10 is instead a punctiform light source, and preferably comprises a single LED diode 17 (acronym of Light Emitting Diode) which is arranged facing the light-guide supporting structure 9, so as to direct the emitted light directly into the supporting element.

More in detail, LED diode 17 is preferably placed in abutment on, or in any case close to, the distal end 14 of oblong light-guide body 9, so as to direct the emitted light directly into the oblong light-guide body 9.

With reference to Figures 2 and 3, finally the lighting assembly 4 also comprises an electronic control board 18 that directly supports the concentrated light source 10, or rather the LED diode 17, and incorporates the electronic power and control circuits of the concentrated light source 10.

In the example shown, in particular, the electronic control board 18 is preferably located underneath the covering mask 6, close to rear body 2.

Preferably, the electronic control board 18 furthermore incorporates also the electronic power and control circuits of the planar light source 8, and the planar light source 8, or rather the plate-shaped OLED diode 16, is electrically connected to the control board 18 via electrical leads 19 that extend on the outer surface of the rear supporting structure 9, from the area of the light-guide supporting structure 9 that houses the planar light source 8, i.e. from the distal end 13 of the oblong light-guide body 9, up to the area of the light-guide supporting structure 9 that engages the covering mask 6.

With reference to Figures 1, 2, and 3, in the example shown, moreover, some lighting assemblies 4 share the same electronic control board 18.

In other words, the electronic control board 18 supports a plurality of concentrated light sources 10, each of which faces the proximal end 13 of a respective oblong light-guide body 9.

With reference to Figures 1, 2, and 5, likewise the lighting assembly/s 4, at least one and preferably all the lighting assemblies 5 comprise: a OLED-type (acronym of Organic Light-Emitting Diode), planar light source 28 which is able to emit light in a distributed manner from its own front face, and is located underneath the front lenticular half-shell 3, with its front face turned towards the inner surface of the front half-shell 3; and a rear supporting structure 29 which is located within the rear body 2, underneath the planar light source 28, and is able to support the planar light source 28, i.e. to keep it in place underneath the front lenticular half-shell 3.

More in detail, the planar light source 28 is fixed on the rear supporting structure 29 with its own front face turned towards the inner surface of the front lenticular half-shell 3 and with its own rear face adherent to the surface of the rear supporting structure 29.

Similarly to the lighting assembly 4, the lighting assembly 5 moreover comprises a LED-type (acronym of Light Emitting Diode) concentrated light source 30, which is located within the rear body 2, spaced apart behind the planar light source 28, and is oriented so as to direct the emitted light towards the rear supporting element 29; and the rear supporting structure 29 is at least partially made of photoconductive material so as to be able to channel/convey the light produced by the concentrated light source 30 up to the planar light source 28 and then to let it come out through the planar light source 28.

In other words, the rear supporting structure 29 incorporates a light-guide body which is made of photoconductive material and is structured so as to channel/convey the light produced by the concentrated light source 30 up to the planar light source 28, and then to let said light come out through the planar light source 28.

More in detail, similarly to the rear supporting structure 9, the rear supporting structure 29 forms a light-guide body which is structured so that the light rays emitted by the concentrated light source 30 can freely enter into the supporting structure 29, travel within the supporting structure 29 up to the area in which the planar light source 28 is located by virtue of the same physical principles that regulate propagation of light within optical-fibre cables, and finally freely come out from supporting structure 29 behind the planar light source 28; whereas the planar light source 28 is structured so as to be freely crossed by the light rays coming out from the rear supporting structure 29.

More in detail, in the example shown the planar light source 28 is preferably provided with at least one transparent portion 31 specifically structured so as to be freely crossed by the light rays coming out from supporting structure 29. Preferably, the transparent portion 31 is moreover located roughly at centre of the planar light source 28.

Obviously, in a different embodiment the whole planar light source 28 could be structured so as to be freely crossed by the light rays coming out from supporting structure 29.

The rear supporting structure 29 therefore incorporates a light-guide body which is structured so as to receive/collect the light emitted by the concentrated light source 30 and then channel/convey said light towards the rear face of planar light source 28.

Preferably, the planar light source 28 is moreover fixed in immovable manner on the supporting structure 29 which, in turn, is rigidly fixed to the rear body 2 and/or to the covering mask 6 so as to keep the planar light source 28 in pace close to front shell 3.

In the example shown, in particular, the rear supporting structure 29 is preferably configured so as to keep the planar light source 28 with its front face locally substantially parallel to the inner surface of the front lenticular half-shell 3, so that the light emitted by the planar light source 28 can reach the front lenticular half-shell 3 with an angle of incidence preferably close to 90°.

Alike the planar light source 8, also the planar light source 28 is preferably, though not necessarily, substantially circular in shape, and transparent portion 31 is preferably located roughly at centre of the planar light source 28.

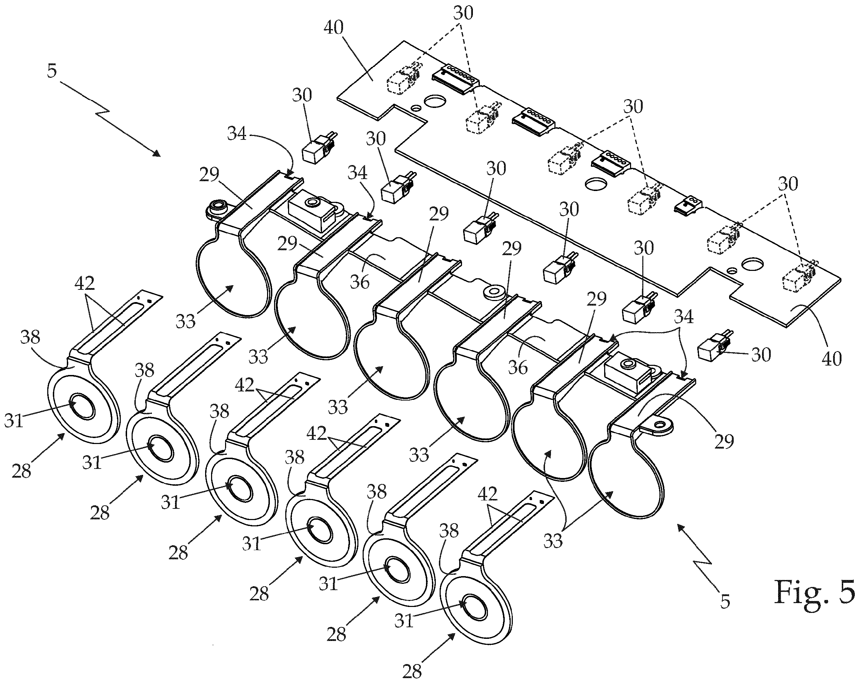

With reference to Figure 2 and 5, in the example shown, in particular, the rear supporting structure 29 consists of an oblong light-guide body, which is placed within the rear body 2 with its own distal end 33 arranged close to the front lenticular half-shell 3 and its own proximal end 34 arranged close to the rear body 2, and is structured so as to convey the light entering from its own proximal end 34 up to its own distal end 33.

The planar light source 28 is arranged with its rear face in abutment on the distal end 33 of the oblong light-guide body 29, whereas the concentrated light source 30 is arranged in abutment on, or in any case directly facing, the proximal end 34 of the oblong light-guide body 29, so as to direct the emitted light towards the proximal end 34.

With reference to Figures 2 and 5, in the example shown, in particular, the rear supporting structure 29 preferably consists of a flat strip made of photoconductive material and substantially L-bent, which extends within the rear body 2 from the planar light source 28 up to the concentrated light source 30, preferably engaging in pass-through manner the covering mask 6, and has the distal end 33 shaped so as to accommodate the planar light source 28.

More in detail, in the example shown, the photoconductive-material flat strip 29 cantilevered projects from a supporting cross member 36 which, in turn, is preferably fixed in rigid manner on the covering mask 6, in the gap between the covering mask 6 and the rear body 2. Preferably, the distal end 33 of the photoconductive-material flat strip 29 is moreover shaped like a pan with dimensions complementary to those of the planar light source 28, so as to accommodate the planar light source 28.

In the example shown, in particular, the photoconductive-material flat strip 29 has the distal end 33 shaped like a substantially circular pan.

Similarly to the light-guide supporting structure 9 of lighting assembly 4, also the light-guide supporting structure 29 is preferably, though not necessarily, made of transparent polycarbonate, transparent polymethylmethacrylate (Plexiglas), or of other similar transparent plastic material, preferably via an injection-moulding process.

Likewise the distal end 13 of the photoconductive-material stem 9, also the light-guide supporting structure 29 preferably has, at the distal end 33, a light-extracting area where the outer surface of the oblong light-guide body 29 is embossed, satin-finished and/or provided with a plenty of tiny prisms or other light-extracting elements which are suitably shaped/structured so as to deflect outwards the light rays travelling in the oblong light-guide body 29 .

Preferably, though not necessarily, also the oblong light-guide body 29 can moreover be coated, obviously except for the distal end 33 and proximal 34, by a reflecting outer jacket which is capable of preventing the light travelling within the oblong light-guide body 29 from coming out from the light-guide body 9 in areas other than the distal end 33.

With reference to Figure 5, likewise the concentrated light source 9, also the concentrated light source 30 is preferably a punctiform light source and comprises a single LED diode (acronym of Organic Light-Emitting Diode), which is arranged facing the light-guide supporting structure 29 so as to direct the emitted light directly into the same supporting structure 29.

More in detail, the LED diode is preferably arranged in abutment on, or in any case close to, the proximal end 34 of the oblong light-guide body 29, so as to direct the emitted light into the oblong light-guide body 29 itself.

With reference to Figures 2 and 5, the planar light source 28, instead, preferably comprises a single plate-shaped OLED diode 38 (acronym of Organic Light-Emitting Diode) which is arranged resting on the light-guide supporting structure 29, or rather on the distal end 13 of the photoconductive-material flat strip 29, with its rear face turned towards the light-guide supporting structure 29 and its front face turned towards the front lenticular half-shell 3, so as to direct the light coming out from its front face perpendicularly to the surface of the same face, towards the front lenticular half-shell 3 preferably with an angle of incidence close to 90°.

Preferably, the plate-shaped OLED diode 38 is moreover structured so as to emit light only from its front face, i.e. from the face turned towards the front half-shell 3.

More in detail, in the example shown, the plate-shaped OLED diode 38 is substantially circular in shape and has its rear face (i.e. the face turned towards the light-guide supporting structure 29) appropriately rendered opaque and/or mirror finished, so as to reflect the incident light towards the front face of the OLED diode 38.

The central part of the plate-shaped OLED diode 38 moreover is overall structured so as to be transparent and preferably, though not necessarily, also photo-inactive, so as to allow the light rays coming out from the distal end 33 of the oblong light-guide body 29 to freely pass through the OLED diode 38. The transparent central part of the plate-shaped OLED diode 38 therefore forms the transparent portion 31 of planar light source 28.

In other words, the plate-shaped OLED diode 38 is preferably structured so as to have a light-emitting area which is annular in shape and surrounds a transparent central area.

With reference to Figures 2 and 5, finally, the lighting assembly 5 also comprises an electronic control board 40, which directly supports the concentrated light source 30, or rather the LED diode, and incorporates the electronic power and control circuits of the concentrated light source 30. Preferably, the electronic control board 40 is moreover placed underneath the covering mask 6, i.e. in the gap between the covering mask 6 and the rear body 2.

More in detail, in the example shown the electronic control board 40 is preferably fixed in rigid manner on the supporting cross member 36, on top of the proximal end 34 of the light-guide body 29.

Preferably, the electronic control board 40 moreover incorporates also the electronic power and controlo circuits of the planar light source 28, and the planar light source 28, or rather the plate-shaped OLED diode 38, is electrically connected to the control board 40 via a series of electrical leads 42 which extend on the outer surface of the light-guide body 29, from the distal end 33 of the light-guide body 29 up to the supporting cross beam 36.

With reference to Figures 2 and 5, in the example shown, moreover, the lighting assemblies 5 preferably share the same supporting cross member 39 and the same electronic control board 40.

In other words, the light-guide supporting structures 29 of the various lighting assemblies 5 are arranged spaced one beside the other along the supporting cross member 36.

The electronic control board 40, instead, supports the concentrated light sources 30 of the various lighting assemblies 5, and is fixed on supporting cross member 36 so that each concentrated light source 30 faces the proximal end 34 of a corresponding oblong light-guide body 29.

The general operation of the automotive light 1 is easily inferable from what described above, and does not need further explanations.

The advantages associated to the particular structure of the lighting assemblies 4 and 5 are remarkable.

Firstly, conversion of the rear supporting structure 9, 29 into a light-guide body allows to superimpose the light produced by the concentrated light source 10, 30 to the light produced by the planar light source 8, 28, thus providing new light patterns and light effects that are particularly elaborate and radically different from those of automotive lights currently available on the market. The light emitted by the concentrated light source 10, 30, in fact, could have a colour different from the light emitted by the planar light source 8, 28.

The planar light sources 8 and 28 and the concentrated light sources 10 and 30, moreover, may be switched on in sequential manner to create dynamic light signals.

Furthermore, the rear supporting structure 9, 29 enables the LED-type punctiform light source 10, 30 to be kept at a due distance from the OLED-type planar light source 8, 28, thus preventing the heat produced by the LED diodes from jeopardizing operation of the OLED diodes.

The operating temperature of LED diodes, in fact, is much higher than the maximum temperature that can be withstood by the OLED diodes.

Last but not least, conversion of the rear supporting structure 9, 29 into a light-guide body also makes it possible to hide from view the electrical leads 19, 42 that have the function of powering the planar light source 8, 28. The rear supporting structure 9, 29, in fact, can be configured so as to allow the light to come out also in an area corresponding to the electrical leads 19, 42, i.e. also in areas other than the distal ends 13, 33.

Finally, it is clear that modifications and variations may be made to the automotive light 1 described above, without thereby departing from the scope of the present invention, as defined in the appended claims.

For example, instead of being provided with a transparent portion, the plate-shaped OLED diode 16, 38 of planar light source 8, 28 could be provided with one or more through holes allowing the light rays r coming out from the distal end 13, 33 of the light-guide supporting structure 9, 29 to freely pass through the plate-shaped OLED diode 16, 38. Obviously the through hole or holes form the transparent portion 11, 31 of the planar light source 8, 28.

In a less sophisticated embodiment, moreover, the rear body 2 could be structured so as to be simply fixed cantilevered on the rear part of the vehicle body (not shown).

## Claims

1. An automotive light (1) comprising: a substantially basin-shaped, rear body (2) which is structured so as to be fixed on the vehicle body; a front lenticular half-shell (3) which is placed to close the mouth of the rear body (2) and is provided with at least one transparent or semi-transparent portion; and at least one lighting assembly (4, 5) which emits light on command and is arranged inside the rear body (2) so as to backlight the transparent or semi-transparent portion of the front lenticular half-shell (3);
said at least one lighting assembly (4, 5), in turn, comprising an OLED-type, planar light source (8, 28) which is able to emit light from its own front face and is located within the rear body (2), with its front face turned towards the inner surface of the front lenticular half-shell (3), so as to direct the emitted light towards the front lenticular half-shell (3); and a rear supporting structure (9, 29), which is located/fixed within the body (2), underneath the planar light source (8), and is adapted to support the planar light source (8, 28) so as to keep said planar light source (8, 28) in place underneath the front lenticular half-shell 3;
wherein said at least one lighting assembly (4, 5) additionally comprises a LED-type, concentrated light source (10, 30) which is located within the body (2), spaced apart behind the planar light source (8, 28), and is oriented so as to direct the emitted light towards the rear supporting structure (9, 29); and
wherein said rear supporting structure (9, 29) is at least partially made of photoconductive material so as to form a light-guide body (9, 29) which is able to channel/convey the light produced by the concentrated light source (10, 30) up to the planar light source (8, 28), and then to let the same light come out through the planar light source (8, 28).

2. Automotive light according to Claim 1, **characterized in that** said planar light source (8, 28) is provided with at least one light passageway (11, 31) structured so as to be freely crossed by the light rays (r) coming out from the rear supporting structure (9, 29).

3. Automotive light according to Claim 2, **characterized in that** said light passageway (11, 31) is located substantially in the middle of the planar light source (8, 28).

4. Automotive light according to any one of the preceding claims, **characterized in that** the planar light source (8, 28) is fixed on the rear supporting structure (9, 29) with its own front face turned towards the inner surface of the front lenticular half-shell (3) and with its own rear face adherent to the surface of the rear supporting structure (9, 29).

5. Automotive light according to any one of the preceding claims, **characterized in that** the rear supporting structure (9, 29) forms an oblong light-guide body which is placed within the rear body (2) with its own distal end (13, 33) arranged close to the front lenticular half-shell (3) and its own proximal end (14, 34) arranged close to the rear body (2), and which is structured so as to convey the light entering from its own proximal end (14, 34) up to its own distal end (13, 33); the planar light source (8, 28) being placed in abutment against the distal end (13, 33) of the oblong light-guide body (9, 29); the concentrated light source (10, 30) being instead faced to the proximal end (14, 34) of the oblong light-guide body (9, 29) so as to direct the emitted light towards the proximal end (14, 34) of the same oblong light-guide body (9, 29).

6. Automotive light according to Claim 5, **characterized in that** the oblong light-guide body (9, 29) extends from the planar light source (8, 28) up to the concentrated light source (10, 30) following a curved line/path.

7. Automotive light according to any one of the preceding claims, **characterized by** additionally comprising a covering mask made of opaque material (6), which is placed within the rear body (2), underneath the front lenticular half-shell (3), and is structured so as to support and partially hide from view said at least one lighting assembly (4, 5).

8. Automotive light according to Claim 7, **characterized in that** the concentrated light source (10, 30) is located underneath the covering mask (6), and **in that** the rear supporting structure (9, 29) engages said covering mask (6) in a through manner.

9. Automotive light according to any one of the preceding claims, **characterized in that** the planar light source (8, 28) comprises a plate-shaped OLED diode (16, 38) which is arranged to rest on the rear supporting structure (9, 29) with its rear face turned towards the rear supporting structure (9, 29) and with its front face turned towards the front lenticular half-shell (3), so as to direct the light coming out from its front face towards the front lenticular half-shell (3).

10. Automotive light according to Claim 9, **characterized in that** the plate-shaped OLED diode (15) is structured so as to emit light only from its front face.

11. Automotive light according to any one of the preceding claims, **characterized in that** the concentrated light source (10, 30) is a punctiform light source and comprises a LED diode (17) which is arranged facing the rear supporting structure (9, 29) so as to direct the emitted light directly into the rear supporting structure (9, 29).

12. Automotive light according to any one of Claims 5 to 11, **characterized in that** the oblong light-guide body (9, 29) has, at its distal end (13, 33), a light-extracting area (15) where the outer surface of the oblong light-guide body (9, 29) is embossed and/or satin-finished and/or provided with a plenty of prisms or other light-extracting elements which are shaped/ structured so as to deflect outwards the light rays travelling within the oblong light-guide body (9, 29).

## Patentansprüche

1. Fahrzeugleuchte (1), umfassend: einen im Wesentlichen schalenförmigen hinteren Körper (2), der dazu ausgebildet ist, an der Fahrzeugkarosserie befestigt zu werden; eine vordere linsenförmige Halbschale (3), die so angeordnet ist, dass sie die Öffnung des hinteren Körpers (2) verschließt, und die mit wenigstens einem transparenten oder halbtransparenten Abschnitt versehen ist; und wenigstens eine Beleuchtungsanordnung (4, 5), die auf Befehl Licht aussendet und innerhalb des hinteren Körpers (2) so angeordnet ist, dass sie den transparenten oder halbtransparenten Abschnitt der vorderen linsenförmigen Halbschale (3) von hinten beleuchtet;
wobei die wenigstens eine Beleuchtungsanordnung (4, 5) ihrerseits eine planare Lichtquelle (8, 28) vom OLED-Typ umfasst, die dazu fähig ist, von ihrer eigenen Vorderseite Licht auszusenden, und die innerhalb des hinteren Körpers (2) angeordnet ist, wobei ihre Vorderseite der Innenfläche der vorderen linsenförmigen Halbschale (3) zugewandt ist, so dass das ausgesendete Licht auf die vordere linsenförmige Halbschale (3) gerichtet wird; und eine hintere Stützstruktur (9, 29), die innerhalb des Körpers (2) unter der planaren Lichtquelle (8) angeordnet/befestigt ist und dazu eingerichtet ist, die planare Lichtquelle (8, 28) zu stützen, so dass die planare Lichtquelle (8, 28) unter der vorderen linsenförmigen Halbschale (3) in Stellung gehalten wird;
wobei die wenigstens eine Beleuchtungsanordnung (4, 5) außerdem eine konzentrierte Lichtquelle (10, 30) vom LED-Typ umfasst, die innerhalb des Körpers (2) beabstandet hinter der planaren Lichtquelle (8, 28) angeordnet und so ausgerichtet ist, dass sie das ausgesendete Licht auf die hintere Stützstruktur (9, 29) richtet; und
wobei die hintere Stützstruktur (9, 29) wenigstens teilweise aus einem photoleitenden Material gefertigt ist, um einen Lichtleitkörper (9, 29) zu bilden, der dazu fähig ist, das von der konzentrierten Lichtquelle (10, 30) erzeugte Licht bis zur planaren Lichtquelle (8, 28) zu führen/übertragen und dann dasselbe Licht durch die planare Lichtquelle (8, 28) austreten zu lassen.

2. Fahrzeugleuchte nach Anspruch 1, **dadurch gekennzeichnet, dass** die planare Lichtquelle (8, 28) mit wenigstens einem Lichtdurchlass (11, 31) versehen ist, der dazu ausgebildet ist, von den Lichtstrahlen (r), die von der hinteren Stützstruktur (9, 29) ausgehen, frei durchquert zu werden.

3. Fahrzeugleuchte nach Anspruch 2, **dadurch gekennzeichnet, dass** der Lichtdurchlass (11, 31) im Wesentlichen in der Mitte der planaren Lichtquelle (8, 28) angeordnet ist.

4. Fahrzeugleuchte nach einem der vorangehenden Ansprüche, **dadurch gekennzeichnet, dass** die planare Lichtquelle (8, 28) an der hinteren Stützstruktur (9, 29) befestigt ist, wobei ihre eigene Vorderseite der Innenfläche der vorderen linsenförmigen Halbschale (3) zugewandt ist und ihre eigene Rückseite an der Oberfläche der hinteren Stützstruktur (9, 29) anhaftet.

5. Fahrzeugleuchte nach einem der vorangehenden Ansprüche, **dadurch gekennzeichnet, dass** die hintere Stützstruktur (9, 29) einen länglichen Lichtleitkörper bildet, der innerhalb des hinteren Körpers (2) angeordnet ist und dessen eigenes distales Ende (13, 33) in der Nähe der vorderen linsenförmigen Halbschale (3) angeordnet ist und dessen eigenes proximales Ende (14, 34) in der Nähe des hinteren Körpers (2) angeordnet ist, und der dazu ausgebildet ist, das von seinem eigenen proximalen Ende (14, 34) eintretende Licht bis zu seinem eigenen distalen Ende (13, 33) zu übertragen; die planare Lichtquelle (8, 28) anliegend an dem distalen Ende (13, 33) des länglichen Lichtleitkörpers (9, 29) angeordnet ist; und die konzentrierte Lichtquelle (10, 30) stattdessen dem proximalen Ende (14, 34) des länglichen Lichtleitkörpers (9, 29) zugewandt ist, um das ausgesendete Licht auf das proximale Ende (14, 34) desselben länglichen Lichtleitkörpers (9, 29) zu richten.

6. Fahrzeugleuchte nach Anspruch 5, **dadurch gekennzeichnet, dass** sich der längliche Lichtleitkörper (9, 29) von der planaren Lichtquelle (8, 28) bis zur konzentrierten Lichtquelle (10, 30) entlang einer gekrümmten Linie bzw. eines gekrümmten Wegs erstreckt.

7. Fahrzeugleuchte nach einem der vorangehenden Ansprüche, **dadurch gekennzeichnet, dass** sie außerdem eine aus lichtundurchlässigem Material (6) gefertigte Abdeckmaske umfasst, die innerhalb des hinteren Körpers (2) unter der vorderen linsenförmigen Halbschale (3) angeordnet ist und dazu ausgebildet ist, die wenigstens eine Beleuchtungsanordnung (4, 5) zu stützten und teilweise vor der Sicht zu verdecken.

8. Fahrzeugleuchte nach Anspruch 7, **dadurch gekennzeichnet, dass** die konzentrierte Lichtquelle (10, 30) unter der Abdeckmaske (6) angeordnet ist, und dass die hintere Stützstruktur (9, 29) durch die Abdeckmaske (6) hindurch eingreift.

9. Fahrzeugleuchte nach einem der vorangehenden Ansprüche, **dadurch gekennzeichnet, dass** die planare Lichtquelle (8, 28) eine plattenförmige OLED-Diode (16, 38) umfasst, die so angeordnet ist, dass sie auf der hinteren Stützstruktur (9, 29) aufliegt, wobei ihre Rückseite der hinteren Stützstruktur (9, 29) zugewandt ist und ihre Vorderseite der vorderen linsenförmigen Halbschale (3) zugewandt ist, so dass das aus ihrer Vorderseite austretende Licht auf die vordere linsenförmige Halbschale (3) gerichtet wird.

10. Fahrzeugleuchte nach Anspruch 9, **dadurch gekennzeichnet, dass** die plattenförmige OLED-Diode (15) dazu ausgebildet ist, Licht nur von ihrer Vorderseite auszusenden.

11. Fahrzeugleuchte nach einem der vorangehenden Ansprüche, **dadurch gekennzeichnet, dass** die konzentrierte Lichtquelle (10, 30) eine punktförmige Lichtquelle ist und eine LED-Diode (17) umfasst, die der hinteren Stützstruktur (9, 29) zugewandt angeordnet ist, um das ausgesendete Licht direkt in die hintere Stützstruktur (9, 29) zu richten.

12. Fahrzeugleuchte nach einem der Ansprüche 5 bis 11, **dadurch gekennzeichnet, dass** der längliche Lichtleitkörper (9, 29) an seinem distalen Ende (13, 33) einen Lichtaustrittsbereich (15) aufweist, wo die Außenfläche des länglichen Lichtleitkörpers (9, 29) geprägt und/oder satiniert und/oder mit einer Vielzahl von Prismen oder anderen Lichtextraktionselementen versehen ist, die so geformt/strukturiert sind, dass sie die innerhalb des länglichen Lichtleitkörpers (9, 29) laufenden Lichtstrahlen nach außen ablenken.

## Revendications

1. Phare automobile (1) comprenant : un corps arrière (2) sensiblement en forme de cuvette qui est structuré pour être fixé sur la caisse du véhicule ; une demi-coque lenticulaire avant (3) qui est placée pour fermer la bouche du corps arrière (2) et est prévue avec au moins une partie transparente ou semi-transparente ; et au moins un ensemble d'éclairage (4, 5) qui émet de la lumière sur commande et est agencé à l'intérieur du corps arrière (2) afin de rétroéclairer la partie transparente ou semi-transparente de la demi-coque lenticulaire avant (3) ;
ledit au moins un ensemble d'éclairage (4, 5) comprenant, à son tour, une source de lumière planaire (8, 28) de type OLED qui peut émettre de la lumière depuis sa propre face avant et est positionnée à l'intérieur du corps arrière (2), avec sa face avant orientée vers la surface interne de la demi-coque lenticulaire avant (3), afin de diriger la lumière émise vers la demi-coque lenticulaire avant (3) ; et une structure de support arrière (9, 29) qui est positionnée/fixée à l'intérieur du corps (2), au-dessous de la source de lumière planaire (8) et est adaptée pour supporter la source de lumière planaire (8, 28) afin de maintenir ladite source de lumière planaire (8, 28) en place au-dessous de la demi-coque lenticulaire avant (3) ;
dans lequel ledit au moins un ensemble d'éclairage (4, 5) comprend de plus une source de lumière concentrée (10, 30) de type LED qui est positionnée à l'intérieur du corps (2), espacée derrière la source de lumière planaire (8, 28) et est orientée afin de diriger la lumière émise vers la structure de support arrière (9, 29) ; et
dans lequel ladite structure de support arrière (9, 29) est au moins partiellement réalisée avec un matériau photoconducteur afin de former un corps de guide-lumière (9, 29) qui peut canaliser/transporter la lumière produite par la source de lumière concentrée (10, 30) jusqu'à la source de lumière planaire (8, 28) et ensuite laisser cette même lumière sortir par la source de lumière planaire (8, 28).

2. Phare automobile selon la revendication 1, **caractérisé en ce que** ladite source de lumière planaire (8, 28) est prévue avec au moins une voie de passage de lumière (11, 31) structurée afin d'être librement traversée par les rayons de lumière (r) sortant par la structure de support arrière (9, 29).

3. Phare automobile selon la revendication 2, **caractérisé en ce que** ladite voie de passage de lumière (11, 31) est positionnée sensiblement au milieu de la source de lumière planaire (8, 28).

4. Phare automobile selon l'une quelconque des revendications précédentes, **caractérisé en ce que** la source de lumière planaire (8, 28) est fixée sur la structure de support arrière (9, 29) avec sa propre face avant orientée vers la surface interne de la demi-coque lenticulaire avant (3) et avec sa propre face arrière qui adhère sur la surface de la structure de support arrière (9, 29).

5. Phare automobile selon l'une quelconque des revendications précédentes, **caractérisé en ce que** la structure de support arrière (9, 29) forme un corps de guide-lumière oblong qui est placé à l'intérieur du corps arrière (2) avec sa propre extrémité distale (13, 33) agencée à proximité de la demi-coque lenticulaire avant (3) et sa propre extrémité proximale (14, 34) agencée à proximité du corps arrière (2), et qui est structuré afin de transporter la lumière entrant par sa propre extrémité proximale (14, 34) jusqu'à sa propre extrémité distale (13, 33) ; la source de lumière planaire (8, 28) étant placée en butée contre l'extrémité distale (13, 33) du corps de guide-lumière (9, 29) oblong ; la source de lumière concentrée (10, 30) faisant plutôt face à l'extrémité proximale (14, 34) du corps de guide-lumière (9, 29) oblong afin de diriger la lumière émise vers l'extrémité proximale (14, 34) du même corps de guide-lumière (9, 29) oblong.

6. Phare automobile selon la revendication 5, **caractérisé en ce que** le corps de guide-lumière (9, 29) oblong s'étend à partir de la source de lumière planaire (8, 28) jusqu'à la source de lumière concentrée (10, 30) en suivant une ligne/trajectoire courbe.

7. Phare automobile selon l'une quelconque des revendications précédentes, **caractérisé en ce qu'**il comprend de plus un masque de couverture réalisé avec un matériau opaque (6) qui est placé à l'intérieur du corps arrière (2), au-dessous de la demi-coque lenticulaire avant (3), et est structuré afin de supporter et partiellement dissimuler de la vue, ledit au moins un ensemble d'éclairage (4, 5).

8. Phare automobile selon la revendication 7, **caractérisé en ce que** la source de lumière concentrée (10, 30) est positionnée au-dessous du masque de couverture (6) et **en ce que** la structure de support arrière (9, 29) met en prise ledit masque de couverture (6) d'une manière passante.

9. Phare automobile selon l'une quelconque des revendications précédentes, **caractérisé en ce que** la source de lumière planaire (8, 28) comprend une diode OLED en forme de plaque (16, 38) qui est agencée en appui sur la structure de support arrière (9, 29) avec sa face arrière orientée vers la structure de support arrière (9, 29) et avec sa face avant orientée vers la demi-coque lenticulaire avant (3), afin de diriger la lumière qui sort de sa face avant vers la demi-coque lenticulaire avant (3).

10. Phare automobile selon la revendication 9, **caractérisé en ce que** la diode OLED en forme de plaque (15) est structurée afin d'émettre de la lumière uniquement à partir de sa face avant.

11. Phare automobile selon l'une quelconque des revendications précédentes, **caractérisé en ce que** la source de lumière concentrée (10, 30) est une source de lumière ponctuelle et comprend une diode LED (17) qui est agencée en face de la structure de support arrière (9, 29) afin de diriger la lumière émise directement dans la structure de support arrière (9, 29).

12. Phare automobile selon l'une quelconque des revendications 5 à 11, **caractérisé en ce que** le corps de guide-lumière (9, 29) oblong a, au niveau de son extrémité distale (13, 33), une zone d'extraction de lumière (15) où la surface externe du corps de guide-lumière (9, 29) oblong est gaufrée et/ou satinée et/ou prévue avec une myriade de prismes ou d'autres éléments d'extraction de lumière qui sont formés/structurés afin de dévier vers l'extérieur les rayons de lumière se déplaçant à l'intérieur du corps de guide-lumière (9, 29) oblong.
